(19) Europäisches Patentamt / European Patent Office / Office européen des brevets

(11) **EP 1 968 837 B1**

(12) **EUROPÄISCHE PATENTSCHRIFT**

(45) Veröffentlichungstag und Bekanntmachung des Hinweises auf die Patenterteilung:
**21.04.2010 Patentblatt 2010/16**

(51) Int Cl.:
***B60T 17/22*** *(2006.01)*   ***F16D 65/14*** *(2006.01)*
***B60T 13/74*** *(2006.01)*

(21) Anmeldenummer: **06829830.6**

(22) Anmeldetag: **22.12.2006**

(86) Internationale Anmeldenummer:
**PCT/EP2006/012436**

(87) Internationale Veröffentlichungsnummer:
**WO 2007/073927 (05.07.2007 Gazette 2007/27)**

(54) **VERFAHREN ZUR REIBWERTERMITTLUNG VON SCHEIBENBREMSEN**

METHOD FOR DETERMINING THE FRICTION VALUE OF DISK BRAKES

PROCÉDÉ DE DÉTERMINATION DU COEFFICIENT DE FROTTEMENT DE FREINS À DISQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **27.12.2005 DE 102005062416**

(43) Veröffentlichungstag der Anmeldung:
**17.09.2008 Patentblatt 2008/38**

(73) Patentinhaber: **KNORR-BREMSE Systeme für Nutzfahrzeuge GmbH 80809 München (DE)**

(72) Erfinder:
• **BAUMGARTNER, Johann 85368 Moosburg (DE)**
• **PERICEVIC, Aleksandar 80636 München (DE)**

(74) Vertreter: **Mattusch, Gundula Knorr-Bremse AG, Patentabteilung V/RG Moosacher Strasse 80 80809 München (DE)**

(56) Entgegenhaltungen:
**WO-A-03/100282     WO-A-2005/017383 DE-A1- 10 151 950**

**Beschreibung**

Die Erfindung betrifft ein Verfahren zur Reibwertermittlung von Scheibenbremsen, insbesondere von Scheibenbremsen in selbstverstärkender Bauart, nach dem Oberbegriff des Anspruchs 1.

Bei serienüblichen, fluidisch betätigten Trommel- und Scheibenbremsen erfolgt die Angleichung der Bremswirkung der einzelnen Radbremsen z.B. rechnerisch unter Annahme eines sogenannten "Berechnungsreibwertes" ausschließlich über die Bemessung der Zuspannkräfte der jeweiligen Bremse. Die Zuspannkräfte werden indirekt über die Erfassung des Betätigungsdruckes auf den hydraulischen oder pneumatischen Bremszylinder ermittelt.

Abweichungen des mittleren Reibwertes aller Bremsen einer Bremsanlage können durch Vergleich der vorgegebenen zur erzielten Verzögerung ermittelt werden. Die erzielte Verzögerung wird dabei durch Auswertung des Drehzahlverhaltens der Räder über die im Bremssystem vorhandenen Drehzahlgeber festgestellt und in einer Recheneinheit z.B. eines ABS- oder EBS-Systems berechnet.

Über das tatsächliche Reibwertverhalten einzelner Bremsen des Fahrzeuges ist jedoch keine Aussage möglich. Unterschiedliche Abweichungen des Reibwertverhaltens der Bremsen einer Achse, zwischen den Bremsen der einzelnen Fahrzeugachsen oder zwischen den Bremsen von gezogenem zu ziehendem Fahrzeug können die Bremsenabstimmung sehr nachteilig beeinflussen.

Von besonderer Bedeutung ist dieser Umstand bei Bremsen, welche zur Reduzierung der Betätigungsenergie Selbstverstärkungseffekte nutzen, denn bei diesen tritt das Problem auf, dass auch die Reibwertunterschiede verstärkt werden, so dass Abweichungen des tatsächlichen Reibwertes vom Berechnungsreibwert überproportional in die von der jeweiligen Bremse erzielten Bremswirkung eingehen.

Es sind bereits Methoden bekannt, bei denen unter Berücksichtigung des Wirkzusammenhanges

$$F_R = \mu \cdot F_N$$

$$\mu = \frac{F_R}{F_N}$$

$F_N :=$    Normalkraft (Spannkraft) der Bremse
$F_R :=$    Reibkraft (Umfangskraft an der Bremsscheibe)
$\mu :=$    Reibbeiwert Bremsbelag / Bremsscheibe

durch direkte oder indirekte Messung von FR und FN der Betrag des $\mu$ ermittelt werden kann.

Die direkte Ermittlung erfolgt z.B. in der Messung z.B. von Bauteilspannungen mittels speziell dazu eingesetzten Sensoren.

Die indirekte Messung erfolgt z.B. anhand einer Auswertung verfügbarer Daten, so z.B. Anhand von Daten zur Stromaufnahme und zur Position des Antriebsmotors, aus welchen aufgrund eines gegebenen Wirkzusammenhanges über z.T. komplexe Rechenoperationen auf die zu ermittelnden Größen geschlossen werden kann. Eine derartige Lösung schlägt die DE 101 51 950 A1 vor.

Bei der direkten Ermittlung besteht der Nachteil in den Kosten für zusätzliche Sensoren sowie in der erhöhten Störanfälligkeit des Systems.

Der indirekten Ermittlung liegen sehr komplexe Wirkzusammenhänge zugrunde, welche aufgrund einer Vielzahl von Einflussgrößen stark fehlerbehaftet sind und sehr aufwendige Rechenoperationen erfordern.

In der o.g. DE 101 51 950 A1 wird auch noch eine Möglichkeit beschrieben, die Ermittlung der Reibkraft durch einen Wirkzusammenhang zwischen Reibkraft und Aktuatorkraft in Verbindung mit dem Reibbeiwert und dem verwendeten Keilwinkel des Selbstverstärkungsmechanismus zu ersetzen. Dieser Zusammenhang ist bei Selbstverstärkungsmechanismen nutzbar, bei denen die Aktuatorkraft parallel zur Reibfläche wirkt, also keine unmittelbare Rückwirkung auf die Spannkraft der Bremse aufweist.

Der Reibwert kann dann aus der Beziehung

$$\mu = \tan \alpha - \frac{F_A}{F_N} \, ;$$

$\alpha$: = Keilwinkel;
$F_A$ : = Aktuatorkraft

ermittelt werden.

Die Aktuatorkraft und die Normalkraft sind ohne eine zusätzliche Sensorik aus der Stromaufnahme (Aktuatorkraft) und der Position des Antriebsmotors (Normalkraft) bestimmbar. Eine genaue Betrachtung zeigt jedoch, dass diese Bestimmung mit relativ großen Fehlern behaftet ist.

In den Zusammenhang Motorstrom - Aktuatorkraft gehen neben fertigungsbedingten Toleranzen des Motors auch Betriebseinflüsse des Motors ein, insbesondere dessen Temperatur, sowie eine Kette mechanischer Wirkungsgrade des Untersetzungs - und Verstellgetriebes.

Der Zusammenhang der Aktuatorposition - Normalkraft (Spannkraft) der Bremse ist durch die Gesamtelastizität des aufgespreizten Bremssattels bestimmt. Neben den Toleranzen des Bremssattels und des Zuspannsystems der Bremse wird dieser Zusammenhang durch das Verformungsverhalten der Bremsbeläge beeinflusst. Neben dem Verschleißzustand der Bremsbeläge wird deren Kompressibilität in starkem Maße durch die im Belagmaterial bestehende Temperatur beeinflusst. Die Temperaturabhängigkeit ist nichtlinear und die Temperaturverteilung im Belagmaterial ist aufgrund der relativ geringen Wärmeleitfähigkeit der üblichen organisch gebundenen Bremsbeläge zeitabhängig inhomogen.

Sehr störend bei der Bestimmung der Spannkraft (Normalkraft) der Bremse mittels der Aktuatorposition sind Leerwege, welche der Aktuator bei der Zuspannbewegung zu überwinden hat und die möglichen Streuungen des Betrages dieser Leerwege. Solche Leerwege sind insbesondere das Lüftspiel der Bremse sowie die vielfältig auftretenden Spiele im Transmissionsweg vom Antriebsmotor bis zum eigentlichen Betätigungselement der Bremse.

Da die Aktuatorposition, d.h. die Stellung des Betätigungselementes durch Erfassung der Winkelposition des Antriebsmotors unter Berücksichtigung des Gesamt-Übersetzungsverhältnisses zwischen Motor und Aktuator erfolgt, wirkt sich auch eine falsche Positionsermittlung als Fehler aus. Bei den üblicherweise verwendeten inkrementalen Positionsgebern können besonders hoch dynamische Verstellvorgänge dazu führen, dass einzelne ausgeführte Winkelschritte des Antriebsmotors nicht korrekt erfasst werden. Solche Fehler können sich bei wiederholten Verstellvorgängen aufsummieren und damit unzulässige Abweichungen der Aktuatorposition hervorrufen.

Da in der der $\mu$ - Ermittlung zugrunde liegenden Beziehung

$$\mu = \tan\alpha - \frac{F_A}{F_N}$$

beide Bestimmungsgrößen $F_A$ und $F_N$ nur mit sehr großen Fehlern ermittelt werden können, ist die Reibwertermittlung nach der beschriebenen Methode unzureichend.

Vor diesem Hintergrund ist es die Aufgabe der Erfindung, ein Verfahren zur Ermittlung des Bremsbelagreibwertes von Scheibenbremsen, insbesondere von selbstverstärkenden Scheibenbremsen, zu schaffen, das vorzugsweise ohne zusätzliche Sensorik und unter Nutzung eindeutiger und einfacher Wirkungszusammenhänge zuverlässige und genügende Aussagen über den Bremsbelagreibwert erlaubt.

Die Erfindung löst diese Aufgabe durch den Gegenstand des Anspruchs 1.

Erfindungsgemäß erfolgt die Reibwertermittlung anhand folgender Größen:

- Motorstrom für zustellende und rückstellende Richtung $I_{zu}$, $I_{rück}$
- Leerlaufstrom $I_0$
- Keilwinkel $\alpha$
- Übertragungskonstante K
- Spannkraft $F_N$

Diese einfache und dennoch für die Praxis genügend genaue Reibwertermittlung ist insbesondere unter definierten Bedingungen während speziell zu diesem Zweck eingeleiteten Test - Bremsbetätigungen möglich.

Die Kombination mit Lüftspieleinstellvorgängen bietet den Vorteil, dass dabei ohnehin die Bremsbeläge kurzzeitig mit geringer Kraft an die Bremsscheibe angelegt werden. In dieser Situation sind im Spannkraft-Übertragungsweg alle störenden Leerwege einschließlich des Lüftspieles beseitigt. Unter Berücksichtigung des Verschleißzustandes, welcher vom elektronisch gesteuerten Nachstellsystem ermittelt wurde und dem für den Zeitpunkt der Test - Bremsbetätigung bekannten Temperaturzustand wird nun eine Aktuatorposition angefahren, welche bei den bekannten Randbedingungen einen vorgegebenen und für alle Test - Bremsbetätigungen gleich bleibenden Wert der Spannkraft ergibt.

Vorteilhafte Ausgestaltungen sind den Unteransprüchen zu entnehmen.

Nachfolgend wird die Erfindung anhand von Ausführungsbeispielen unter Bezug auf die Zeichnung anhand von Ausführungsbeispielen näher beschrieben. Es zeigt:

Fig. 1    eine Skizze, welche den prinzipiellen Aufbau einer Scheibenbremse mit Selbstverstärkung veranschaulicht;

Fig. 2    eine Prinzipskizze des Wirkungsprinzips der Bremse aus Fig.1;

Fig. 3    eine Skizze der Kraft- und Winkelverhältnisse an einer Keilfläche eines Druckstempels einer Bremse nach Art der Fig. 1;

Fig. 4    eine Wirkungsgradkette; und

Fig. 5    ein Flussdiagramm.

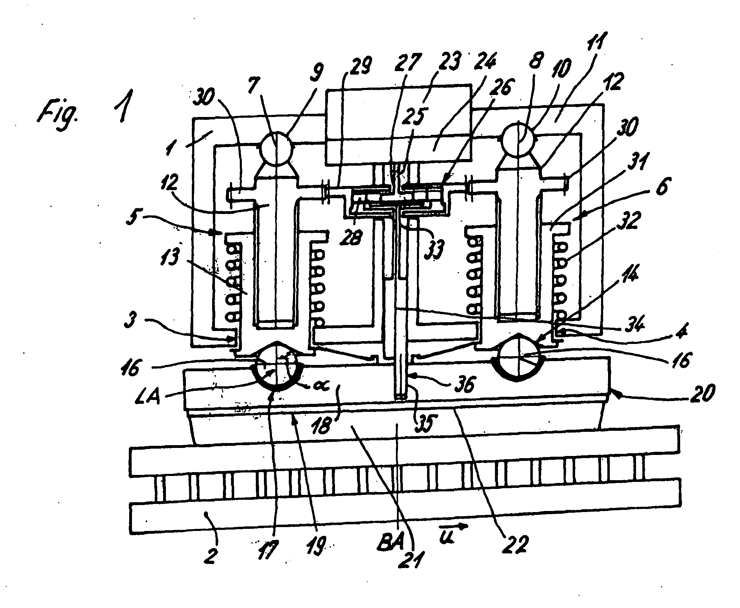

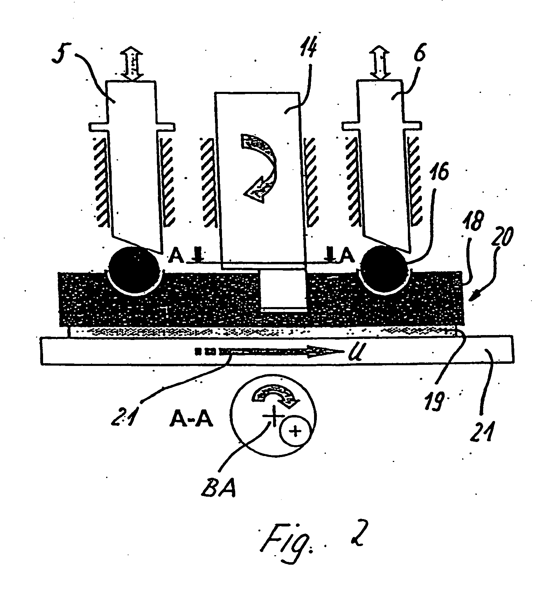

Das erfindungsgemäße Verfahren eignet sich insbesondere für selbstverstärkende Scheibenbremse, wie sie in Fig. 1 dargestellt sind. Zunächst sei daher näher das Funktionsprinzip der Fig. 1 mit einer nicht verstellbaren Rampensteigung in den Druckflächen 5, 6 der Bremsstempel beschrieben. Verstellbare Druckstempel zur Veränderung der Rampensteigung sind denkbar, hier aber nicht gezeigt. Fig. 2 veranschaulicht im Zusammenspiel mit Fig. 1 das Grundfunktionsprinzip.

Bevorzugt bauen die erfindungsgemäßen Scheibenbremsen auf einem Festsattelkonzept auf, bei dem ein ein- oder mehrteiliger Bremssattel 1 (auch Bremsengehäuse genannt) relativ zu einer Bremsscheibe 2 unbeweglich an einer Radachse befestigt ist. Basis der nachfolgend beschriebenen Konzepte ist insofern eine Festsattelbremse mit äußerer elektromechanisch betätigter und elektronisch geregelter Verschleißnachstellung. Das Wirkprinzip und die beschriebenen Merkmale sind prinzipiell auch für andere Bremsenbauarten, wie z.B. Schiebesattel- oder Schwenksattelbremsen, anwendbar. Lediglich der die Bremsbetätigung beinhaltende Sattelkopf der mechanisch/pneumatisch betätigten Basisbremse wird ersetzt durch die elektromechanischer Zuspanneinheit mit Selbstverstärkung. Eine Festsattelbremse mit pneumatisch betätigter Zuspanneinrichtung dieser Art zeigen z.B. die DE 36 10 569 A1, die DE 37 16 202 A1 oder die EP 0 688 404 A1. Eine Festsattelbremse mit elektromotorischer Nachstellung zeigt die WO 02/14 708 A1. Derartige elektromotorische Nachstelleinrichtungen können bei der vorgeschlagenen Ausführungsbeispielen - wenn gewünscht - jeweils reaktionsseitig angeordnet werden. Es kann auch sogar nur reaktionsseitige eine einzige Nachstellvorrichtung mit einem Elektromotor als Antrieb angeordnet sein. Diese Variante ist insbesondere bei einer Scheibenbremse mit einer Selbstverstärkungseinrichtung, einem elektromotorischem Aktuator und mit einem Festsattel besonders kostengünstig und bauraumsparend. Dabei können der zuspannseitige und der reaktionsseitige Bremsbelag auch unterschiedlich dick sein.

In Fig. 1 ist der Bremssattel 1 lediglich in seinem zuspannseitigen Bereich angedeutet. In der Praxis umgreift er vorzugsweise rahmenartig den oberen Umfangsbereich der Bremsscheibe und ist an einem (hier nicht zu erkennenden Achsflansch) befestigt.

Der Bremssattel 1 weist an seiner der Bremsscheibe 2 mit einer Bremsscheibendrehachse zugewandten Seite eine oder mehrere, vorzugsweise zwei Öffnungen 3, 4 und eine korrespondierende Anzahl von Bremsstempeln 5, 6 (hier zwei) auf, die parallel zur Bremsscheibenachse BA ausgerichtet sind.

Nach Fig. 1 bis 4 sind jeweils zwei Bremsstempel 5, 6 parallel zueinander angeordnet.

Die beiden Bremsstempel 5, 6 bzw. Nachstellkolben stützen sich jeweils direkt oder über zwischengeschaltete Elemente; hier Gleitlagerschalen 9, 10; an der bremsscheibenabgewandten Rückwand 11 des Bremssattels ab. Als Lagereinrichtungen werden vorzugsweise Kugeln, 7, 8 mit Gleitlagerschalen 9 eingesetzt.

Die Lagereinrichtungen sind derart ausgelegt, dass sie eine Drehung der Bremsstempel 5, 6 bzw. Nachstellkolben um ihre eigene Längsachse LA erlauben.

Dabei sind jeweils im Bremsstempel 5, 6 und im Bremssattel kugelsegmentartige (kalottenartige) Ausnehmungen ausgebildet, von denen in eine (hier in die im Bremssattel) die Gleitlagerschalen 9, 10 eingesetzt ist, so dass sich die Kugeln 7, 8 relativ zur Gleitlagerschale drehen können.

Alternativ können die Kugeln 7, 8 auch als kugelförmige Ansätze an den zum Bremssattel gewandten Enden der Bremsstempel 5, 6 ausgebildet sein (hier nicht dargestellt), die dann in korrespondierende Ausnehmungen im Bremssattel mit Gleitlagerschalen eingreifen.

Denkbar sind anstelle der Kugeln und Ausnehmungen auch ebene Gleitlager oder ringförmige Lager oder dgl.. (hier nicht dargestellt).

Die Bremsstempel 5, 6 weisen jeweils eine mit einem Außengewinde versehene Spindel 12 auf, auf der eine hülsenartige Mutter 13 mit einem korrespondierenden Innengewinde verdrehbar angeordnet ist. Dieses Gewinde kann je nach Auslegung nicht selbsthemmend oder selbsthemmend sein.

Die Muttern 13 weisen an ihrer von der Bremsscheibe abgewandten Seite einen Flansch 31 auf, wobei zwischen dem Flansch 31 und der Innenwandung des Bremssattels 1 jeweils Druckfedern 32 wirken, welche die Mutter 13 konzentrisch umfassen und auf den Flansch eine vorgegebene Kraft ausüben bzw. den Flansch 31 relativ zur Bremssattelinnenwand vorspannen.

Alternativ wird die gesamte Mechanik gegen die Druckplatte verspannt.

Nach Fig. 1 bis 4 ist die Mutter 13 jedes Bremsstempels 5, 6 an der zur Bremsscheibe zugewandten Seite angeordnet und die Spindel 12 an der zum Bremssattelinneren gewandten Seite. Eine umgekehrte Anordnung wäre auch denkbar (hier nicht dargestellt).

Durch Verschrauben der Mutter 13 auf der Spindel kann die axiale Länge jedes einzelnen derart ausgebildeten Bremsstempels 5, 6 - beispielsweise zum Ausgleich von Bremsbelagverschleiß und beim Anlegen der Beläge an die Bremsscheibe 2 - verstellt werden.

An ihrer der Bremsscheibe zugewandten Seite, also an ihren Druckflächen, sind die Bremsstempel 5, 6, hier die Muttern 13, jeweils mit einer rampenartigen Ausnehmung oder Kontur 14 versehen, deren tiefste Stelle vorzugsweise im Bereich der Längsachse der Bremsstempel liegt.

In die Ausnehmungen 14 greifen jeweils Rollkörper 16 ein, die hier in bevorzugter Ausgestaltung als Kugeln 16 ausgebildet sind.

Die Rollkörper 16 greifen an ihren von der Bremsscheibe abgewandten Seiten in je nach Ausgestaltung der Rollkörper ausgebildete, hier kalottenförmige Gleitlagerschalen 17, die in Ausnehmungen korrespondierender Formgebung in einer Druckplatte 18 eingesetzt sind, die an der Trägerplatte 19 eines zuspannseitigen Bremsbelages 20 mit Bremsbelagmaterial 21 anliegt, der im Bremssattel 1 parallel zur Bremsscheibendrehachse BA und in Umfangsrichtung U (bzw. Tangential bzw. parallel zur Tangentialen) relativ zur Bremsscheibe 2 beweglich angeordnet ist.

Eine Klammerfeder 22 zwischen Druckplatte 18 und Muttern 13 hält die Druckplatte 18 unter Vorspannung an den Muttern 13. Alternativ ist es auch denkbar, die Druckplatte auf andere Weise, z.B. am Gehäuse (Sattel) zu verspannen.

Zum Antrieb der Bremse dient ein elektrischer Antriebsmotor 23, dem vorzugsweise ein Untersetzungsgetriebe 24 nachgeordnet ist, dessen Abtriebswelle 25 auf ein weiteres Getriebe 26, insbesondere ein Planetengetriebe wirkt, das mittig zwischen den Spindeln angeordnet ist.

Dabei treibt die Abtriebswelle 25 ein Sonnenrad 27 des Planetengetriebes 26, welches Planetenräder 28 mitnimmt. Die Planetenräder 28 kämmen (hier nicht detailliert dargestellt) mit dem Sonnenrad 27 und einem innen- und außenverzahnten Ring 29. Je nach Schaltzustand (Schaltbarkeit hier nicht dargestellt) setzen sie entweder den Planetenstern 33 oder den Ring 29 in Drehung. Der Ring 29 kämmt mit seiner Außenverzahnung mit Zahnrädern 30, die auf die Spindeln 12 aufgesetzt oder an diese angeformt sind.

Zum selbsttätigen Umschalten des Antriebs (z.B. ein Elektromotors) kann ein federbelasteter Kugelrastmechanismus vorgesehen sein (hier nicht dargestellt). Der Umschaltvorgang kann auch auf andere Weise realisiert werden (z.B. elektromagnetisch).

In axialer Verlängerung des Planetenstems 33 ist eine hier zylindrisch ausgebildete und parallel zur Bremsscheibenachse angeordnete Kurbel 34 vorgesehen, die an ihrer zur Bremsscheibe 2 gewandten Seite mit einem außermittig (exzentrisch) ausgebildeten, ebenfalls parallel zur Bremsscheibenachse BA parallel ausgerichteten Kurbelzapfen 35 in eine korrespondierende Öffnung 36 in einer Bremsbelageinheit eingreift, wobei die Öffnung 36 die vorzugsweise einen zum Querschnitt des Kurbelzapfens 35 korrespondierenden Querschnitt aufweist.

Im Ausführungsbeispiel der Fig. 1 besteht die Betätigungseinrichtung bzw. Zuspanneinheit aus den zwei, zum Zwecke der Verschleißnachstellung längenveränderlichen Nachstellkolben bzw. Bremsstempeln 5, 6, welche in ihrer der Bremsscheibe 2 zugewandten Druckfläche die Ausnehmungen 14 nach Art von Rampenkonturen aufweisen, an denen die Rollkörper 16 ablaufen, welche die von der Bremse erzeugte Zuspannkraft auf die Bremsbelageinheit bzw. auf die auf den Bremsbelag aufliegende Druckplatte übertragen.

In der Druckfläche der Bremsbelageinheit bzw. der Druckplatte 18 sind die Rollkörper 16 über ein entgegengesetzt gestaltetes Rampenprofil (hier nicht dargestellt) oder (bevorzugt, da die Rollkörper besonders sicher geführt sind; hier dargestellt) in dem Gleitlagerbett (Gleitlagerschalen 17) aufgenommen. Es wäre auch eine umgekehrte Anordnung mit Rampen in der Bremsbelageinheit und einem Gleitlagerbett für die Rollkörper in den Bremsstempeln 5, 6 denkbar (hier nicht dargestellt).

Die Bremsbelageinheit, hier bestehend aus der ein- oder mehrteiligen Kombination von Bremsbelag 20 und Druckplatte 18, wird federnd so gegen die Bremsstempel und Nachstellkolben 5, 6 gedrückt, dass die dazwischen angeordneten Rollkörper 16 zwischen der Bremsbelageinheit und den Bremsstempeln elastisch eingespannt sind.

Die Betätigung der Bremse erfolgt nach einem Anlegevorgang des Bremsbelages 20 an die Bremsscheibe durch ein Verschieben der Druckplatte nebst Bremsbelag 20 parallel zur Reibfläche der Bremsscheibe in Drehrichtung bzw. Umfangsrichtung derselben.

Diese Verschiebung wird vorzugsweise durch den Kurbeltrieb 35, 36 bewirkt, der mit einem Abtriebs- und hier Kurbelzapfen 35 etwa mittig an der Druckplatte 18 der Bremsbelageinheit 18, 20 angreift und parallel zur Rotationsachse der Bremsscheibe im Zuspanngehäuse - Bremssattel - 1 gelagert wird.

Die Betätigung des Kurbeltriebes erfolgt über den elektrischen Antrieb, z.B. den Elektromotor 23 mit nachgeschaltetem Getriebe 24.

Die tiefste Stelle der Ausnehmungen bzw. Rampen 14 ist jeweils vorteilhaft so ausgestaltet, dass die Rollkörper, insbesondere Kugeln an der tiefsten Stelle verrastet sind und nur gegen eine Mindestrastkraft aus der Vertiefung lösbar sind.

Der Kurbelzapfen 35 ist damit in der Druckplatte bzw. der diese enthaltenden Bremsbelageinheit derart gelagert, dass der Bremsbelag der Bewegungsbahn des Kurbelzapfens 35 folgen muss.

Anstelle einer Betätigung mit Kurbel 35 ist auch eine Betätigung der Druckplatte über eine Hebelanordnung denkbar (hier nicht dargestellt).

Eine vorteilhafte Besonderheit dieser Bauart besteht darin, dass der Aktuator auf das Selbstverstärkungssystem bestehend aus Bremsbelag mit Druckplatte 18, Rampenkolben 31, 14 und Rollkörpern 16 sowohl vortreibende als auch rückziehende Kräfte ausüben kann.

Das in Fig. 1 offenbarte Selbstverstärkungssystem arbeitet nahezu ohne zusätzliche Betätigungsenergie sowohl in zu- als auch in rück- stellender Richtung, wenn der Winkel Alpha der Rampen bzw. Verstärkungsrampen 14 und der tatsächlich vorhandene Belagreibwert $\mu$ die Beziehung

$$\mu = \tan \alpha$$

.

erfüllt.

Ist der tatsächlich vorhandene Reibwert geringer als tan $\alpha$, muß in zustellender Richtung eine Betätigungskraft aufgewendet werden. Ist der tatsächliche Reibwert größer als *tan* $\alpha$ ist eine rückhaltende Kraft notwendig damit der Bremsbelag nicht bis zur Position max. Bremswirkung durchgezogen wird.

Eine Analyse der Kraftverhältnisse in zu - und rückstellender Richtung unter Einbeziehung des mechanischen Wirkungsgrades ergibt die überraschende Erkenntnis, dass es mit der Messung der Aktuatorkraft in zu - und rückstellender Richtung möglich ist, den Einfluss des mechanischen Wirkungsgrades in der Übertragungskette vom Motor bis zum Aktuatorelement am Bremsbelag auszuschalten bzw. auch den Betrag dieses mech. Wirkungsgrades zu ermitteln.

In einem auf dieser Erkenntnis basierenden Reibwertermittlungsverfahren können auch die weiteren Störgrößen ausgeschaltet werden, indem die Reibwertermittlung nicht bei Bremsvorgängen sondern unter definierten Bedingungen bei speziell zu diesem Zweck eingeleiteten Test - Bremsbetätigungen durchgeführt wird. Dieser Vorgang wird mit niedrigen Bremskräften sehr kurzzeitig bevorzugt an einzelnen Rädern oder auch einzelnen Achsen des Fahrzeuges vorzugsweise im Zusammenhang mit Lüftspieleinstellvorgängen des el. Verschleißnachstellsystems durchgeführt.

Bei Lüftspieleinstellvorgängen sind im Spannkraft-Übertragungsweg die Leerwege einschließlich des Lüftspieles beseitigt. Unter Berücksichtigung des Verschleißzustandes, der zudem vom elektronisch gesteuerten Nachstellsystem ermittelt wurde und dem für den Zeitpunkt der Test - Bremsbetätigung bekannten Temperaturzustand wird nun eine Aktuatorposition angefahren, welche bei den bekannten Randbedingungen einen vorgegebenen und für alle Test - Bremsbetätigungen gleich bleibenden Wert der Spannkraft ergibt.

Damit ist die Spannkraft für die Reibwertermittlung eine konstante Größe.

Bei der Ermittlung der Aktuatorkraft durch Messung der Motorstromaufnahme stellen die Reibungswiderstände den größten Störeinfluss dar. Dieser Einfluss wird durch die genaue Ermittlung des mechanischen Wirkungsgrades ausgeschaltet. Temperatureinflüsse auf den Elektromotor (Dauermagnete) können durch die Wahl des Zeitpunktes der Testbremsungen vermieden werden. Fertigungstoleranzen werden zweckmäßig durch einen Eichvorgang bei der Endprüfung im Montageprozess der Bremse kompensiert.

Auf diese Weise wird es möglich mit einem sehr einfachen Prüfvorgang unter Einhaltung konstanter Randbedingungen durch Auswertung der Aktuatorkraft in zu- und rückstellender Betätigungsrichtung den Bremsbelag - Reibbeiwert genau zu ermitteln und zusätzlich auch genauen Aufschluss über die im Betätigungssystem auftretenden Reibungswiderstände zu erhalten.

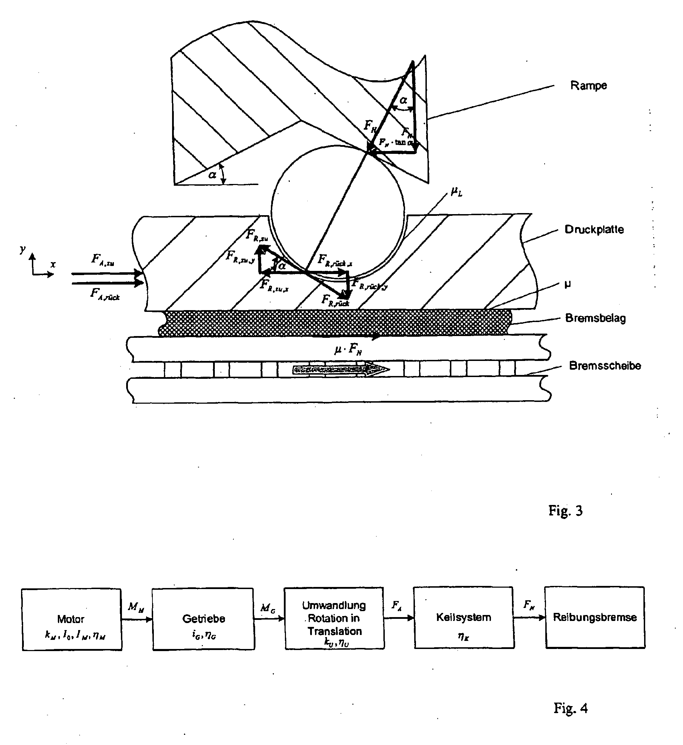

Für die nachfolgende Betrachtung wird ergänzend auf Fig. 3 bis 5 verwiesen.

Grundsätzlich kann die Gesamtreibung im Betätigungsantreibstrang auf die Lagerreibung im Keilsystem reduziert werden. Damit gilt

$$F_R = \mu_L \cdot F_H \, ,$$

wobei $\mu_L$ die Reibung im Gesamtsystem darstellt.

Weiterhin gilt, dass

$$F_H = \frac{F_N}{\cos\alpha}$$ und $F_{Rx} = F_R \cdot \cos\alpha$ oder $F_{Rx} = F_N \cdot \mu_L$.

Die Reibung wirkt der Bewegungsrichtung immer entgegen, so dass die Reibung indirekt einem mechanischen Wirkungsgrad $\eta_m$ des Betätigungssystems entspricht. Die Beziehung $F_{Rx} = F_N \cdot \mu_L$ kann deshalb auch folgendermaßen ausgedrückt werden:

$$F_{Rx} = F_N \cdot (1 - \eta_m)$$

Für die zustellende Richtung gilt:

$$F_{A.zu} - F_N \cdot \tan\alpha + F_N \cdot \mu - F_N \cdot (1 - \eta_m) = 0$$

Für die rückstellende Richtung gilt:

$$F_{A.rück} - F_N \cdot \tan\alpha + F_N \cdot \mu + F_N \cdot (1 - \eta_m) = 0$$

Die Lösung der beiden Gleichungen nach den zwei Unbekannten $\mu$ und $\eta_m$ ergibt:

a) Mechanischer Wirkungsgrad $\eta_m$ der Betätigungseinrichtung:

$$\eta_m = 1 - \frac{\left(F_{A.zu} - F_{A.rück}\right)}{2 \cdot F_N} \quad (1)$$

b) Reibwert $\mu$ zwischen Bremsbelag und Bremsscheibe:

$$\mu = \tan\alpha - \frac{\left(F_{A.zu} + F_{A.rück}\right)}{2 \cdot F_N} \quad (2)$$

Der Zusammenhang zwischen dem Motorankerstrom I und Motormoment $M_M$ wird in der Literatur wie folgt beschrieben:

$$M_M = M_i - M_R$$

$M_i$: inneres Drehmoment
$M_R$: Reibungsmomente

$$M_i = c \cdot \phi \cdot I = k_M \cdot I$$

c: Motorkonstante
Φ: Erregerfluss

$k_M$: Flussverkettung

$$M_R = k_M \cdot I_0$$

$I_0$: Leerlaufstrom

$$M_M = k_M \cdot (I - I_0)$$

Aus dieser Beziehung lässt sich der Zusammenhang zwischen dem Ankerstrom und der Aktuatorkraft über die Wirkungsgradkette der Fig. 4 bestimmen:

$$F_A \cdot k_U = i_G \cdot \eta_M \cdot \eta_G \cdot \eta_U \cdot \eta_K \cdot M_M$$

$k_U$: Übersetzungskonstante [m]

$$F_A = \frac{i_G \cdot \eta_M \cdot \eta_G \cdot \eta_U \cdot \eta_K \cdot k_M}{k_U} \cdot (I - I_0)$$

mit $K = \dfrac{i_G \cdot k_M}{k_U}$ und $\eta_m = \eta_M \cdot \eta_G \cdot \eta_U \cdot \eta_K$ wird

$$F_A = K \cdot \eta_m \cdot (I - I_0) \quad (3).$$

$K$: Ubertragungskonstante [Vs/m]
Bildet man die Differenz aus $F_{A,zu}$ zu $F_{A,rück}$ mit Hilfe der Gleichung (3), so gilt:

$$F_{A,zu} - F_{A,rück} = K \cdot \eta_m \cdot (I_{zu} - I_{rück}) \quad (4)$$

Bildet man die Summe aus $F_{A,zu}$ und $F_{A,rück}$ mit Hilfe der Gleichung (3), so gilt:

$$F_{A,zu} + F_{A,rück} = K \cdot \eta_m \cdot (I_{zu} + I_{rück} - 2 \cdot I_0) \quad (5)$$

(4) eingesetzt in (1) liefert die Beziehung zur Berechnung des mechanischen Wirkungsgrades des Gesamtsystems in Abhängigkeit vom Ankerstrom:

$$\eta_m = \frac{1}{1 + K \cdot \dfrac{(I_{zu} - I_{rück})}{2 \cdot F_N}} \quad (6)$$

(5) eingesetzt in (2) liefert die Beziehung zur Berechnung des Reibwertes zwischen Bremsscheibe und Bremsbelag:

$$\mu = \tan\alpha - \frac{K \cdot \eta_m \cdot \left(I_{zu} + I_{rück} - 2 \cdot I_0\right)}{2 \cdot F_N} \quad (7)$$

oder [(6) in (7)]:

$$\mu = \tan\alpha - \frac{K \cdot \left(I_{zu} + I_{rück} - 2 \cdot I_0\right)}{2 \cdot F_N + K \cdot \left(I_{zu} - I_{rück}\right)}$$

Dadurch ist für die Reibwertbestimmung $\mu$ die Kenntnis der folgenden Größen notwendig:

- Motorstrom für zustellende und rückstellende Richtung $I_{zu}$ ,$I_{rück}$

- Leerlaufstrom $I_0$

- Keilwinkel $\alpha$

- Übertragungskonstante K

- Spannkraft $F_N$

$$\mu = \tan\alpha - \frac{K \cdot \left(I_{zu} + I_{rück} - 2 \cdot I_0\right)}{2 \cdot F_N + K \cdot \left(I_{zu} - I_{rück}\right)}$$

Der Motorstrom $I_{zu}$ bzw. $I_{rück}$ und der Leerlaufstrom $I_0$ werden über das Motormanagement der Radbremse erfasst. Die Übertragungskonstante K ist bekannt, da die Motorkonstante $k_M$, das Übersetzungsverhältnis $i_G$ und die Übersetzungskonstante $k_U$ (Umwandlung der Rotationsbewegung des Antriebstrangs in eine Translationsbewegung des Bremsbelags) fest installiert sind.

Für die Ermittlung der Spannkraft $F_N$ muss eine Information über folgende Größen vorliegen:

- Verschleißzustand der Beläge $t_{Belag}$
- Sattelsteifigkeit $c_{Sattel}$
- Elastizitätsmodul des Bremsbelages $E_{Belag}$
- Keilposition $x_{Keil}$
- Keilwinkel $\alpha$

$$c_{Belag,neu} = \frac{E_{Belag} \cdot A_{Belag}}{2 \cdot t_{Belag}}$$

$$F_N = x_{Keil} \cdot \tan\alpha \cdot \frac{c_{Sattel} \cdot c_{Belag,ges}}{c_{Sattel} + c_{Belag,ges}}$$

Da die Testbremsungen während des Nachstellvorgangs erfolgen, kann die Belagdicke mit hinreichender Genauigkeit bestimmt werden. Dadurch bleibt als einzige Störgröße für die Belagsteifigkeit die Belagtemperatur, welche den Elastizitätsmodul des Belags beeinflusst, denn

$$c_{Belag} = \frac{E \cdot A}{t},$$

wobei E = f(T).

Eine Kompensation dieser Störgröße kann durch eine Temperaturhochrechnung wie sie aus der DE 10 2004 044940 A1 bekannt ist, erfolgen.

Je nach Belagtemperatur und Verschleißzustand wird eine neue Testposition $x_{Koil}$ zur Bestimmung des Reibwertes berechnet und angefahren.

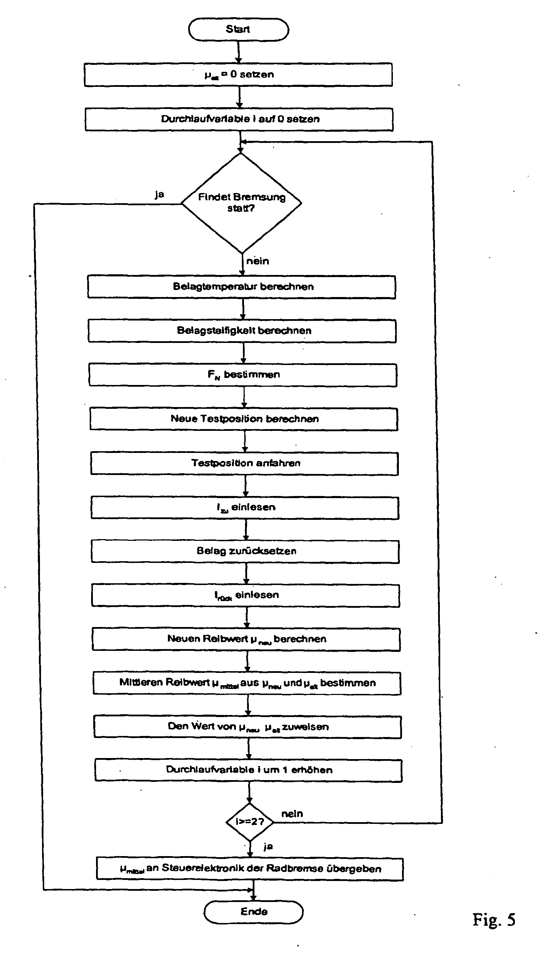

Fig. 5 zeigt einen Programmalgorithmus zur Bestimmung des Reibwertes. Bei der Routine der Fig. 5 werden pro Radbremse zwei Teilbremsungen durchgeführt, so dass aus den beiden ermittelten Reibwerten ein Mittelwert gebildet werden kann.

**Bezugszeichen**

| | |
|---|---|
| Bremssattel | 1 |
| Bremsscheibe | 2 |
| Öffnungen | 3,4 |
| Bremsstempeln | 5, 6 |
| Gleitlagerschalen | 9, 10 |
| Rückwand | 11 |
| Spindel | 12 |
| Mutter | 13 |
| rampenartige Ausnehmung | 14 |
| Rollkörper | 16 |
| Gleitlagerschalen | 17 |
| Trägerplatte | 19 |
| Bremsbelag | 20 |
| Bremsbelagmaterial | 21 |
| Klammerfeder | 22 |
| Antriebsmotor | 23 |
| Untersetzungsgetriebe | 24 |
| Abtriebswelle | 25 |
| Getriebe | 26 |

| | |
|---|---|
| Sonnenrad | 27 |
| Planetenräder | 28 |
| Ring | 29 |
| Zahnräder | 30 |
| Flansch | 31 |
| Druckfedern | 32 |
| Planetenstern | 33 |
| Kurbel | 34 |
| Kurbelzapfen | 35 |
| Öffnung | 36 |

**Patentansprüche**

1. Verfahren zur Ermittlung des Reibwertes einer Scheibenbremse, insbesondere von Scheibenbremsen in selbstverstärkender Bauart mit einer Zuspanneinrichtung, die auf den Bremsbelag zustellende und rückziehende Kräfte ausüben kann, **dadurch gekennzeichnet, dass** die Reibwertermittlung rechnerisch anhand folgender Größen erfolgt:

   • Motorstrom für zustellende und rückstellende Richtung $I_{zu}$, $I_{rück}$
   • Leerlaufstrom $I_0$
   • Keilwinkel $\alpha$
   • Übertragungskonstante K
   • Spannkraft $F_N$

2. Verfahren nach Anspruch 1, **dadurch gekennzeichnet, dass** die Reibwertermittlung unter definierten Bedingungen während speziell zu diesem Zweck eingeleiteten Test-Bremsbetätigungen durchgeführt wird.

3. Verfahren nach Anspruch 1 oder 2, **dadurch gekennzeichnet, dass** der Reibwert $\mu$ zwischen Bremsscheibe und Bremsbelag bestimmt wird nach:

$$\mu = \tan\alpha - \frac{K \cdot \eta_m \cdot (I_{zu} + I_{rück} - 2 \cdot I_0)}{2 \cdot F_N} \quad (7)$$

oder nach:

$$\mu = \tan\alpha - \frac{K \cdot (I_{zu} + I_{rück} - 2 \cdot I_0)}{2 \cdot F_N + K \cdot (I_{zu} - I_{rück})},$$

wobei

$\eta_m$ = mechanischer Wirkungsgrad.

4. Verfahren nach einem der vorstehenden Ansprüche 2 bis 3, **dadurch gekennzeichnet, dass** während der Test-Bremsbetätigungen auf der Basis einer Messung der Aktuatorkraft in zu - und rückstellender Richtung der Einfluss des mechanischen Wirkungsgrades in der Übertragungskette vom Motor bis zum Aktuatorelement am Bremsbelag ausgeschaltet und der mechanische Wirkungsgrad ermittelt wird.

5. Verfahren nach einem der vorstehenden Ansprüche 2 bis 4, **dadurch gekennzeichnet, dass** die Test-Bremsbctätigungen mit niedrigen Bremskräften kurzzeitig, bevorzugt an einzelnen Rädern oder auch einzelnen Achsen des Fahrzeuges durchgeführt werden.

6. Verfahren nach einem der vorstehenden Ansprüche 2 bis 5, **dadurch gekennzeichnet, dass** die Test-Bremsbetätigungen im Zusammenhang mit Lüftspielemstellvorgängen eines elektromotorisch angetriebenen Verschleißnachstellsystems durchgeführt werden.

7. Verfahren nach einem der vorstehenden Ansprüche, **dadurch gekennzeichnet, dass** Fertigungstoleranzen durch einen Eichvorgang bei der Endprüfung im Montageprozess der Bremse bestimmt werden.

8. Verfahren nach einem der vorstehenden Ansprüche, **dadurch gekennzeichnet, dass** bei einem Prüfvorgang unter Einhaltung konstanter Randbedingungen durch Auswertung der Aktuatorkraft in zu- und rückstellender Betätigungsrichtung der Bremsbelag - Reibbeiwert genau ermitteln wird, um die im Betätigungssystem auftretenden Reibungswiderstände zu ermitteln.

9. Verfahren nach Anspruch 8, **dadurch gekennzeichnet, dass** ein mechanischer Wirkungsgrad $\eta_m$ der Betätigungseinrichtung wie folgt ermittelt wird:

$$\eta_m = 1 - \frac{\left(F_{A,zu} - F_{A,rück}\right)}{2 \cdot F_N} \quad (1),$$

wobei

$F_N$ = Spannkraft, $F_A : =$ *Aktuatnrkraft*

und dass der Reibwert $\mu$ zwischen Bremsbelag und Bremsscheibe nach folgender Formel ermittelt wird

$$\mu = \tan\alpha - \frac{\left(F_{A,zu} + F_{A,rück}\right)}{2 \cdot F_N} \quad (2).$$

10. Verfahren nach einem der vorstehenden Ansprüche, **dadurch gekennzeichnet, dass** ein mechanischer Wirkungsgrad $\eta_m$ des Gesamtsystems in Abhängigkeit vom Motorstrom $I_{zu}$ bzw. $I_{rück}$ wie folgt errechnet wird:

$$\eta_m = \frac{1}{1 + K \cdot \dfrac{\left(I_{zu} - I_{rück}\right)}{2 \cdot F_N}} \quad (6)$$

11. Verfahren nach einem der vorstehenden Ansprüche, **dadurch gekennzeichnet, dass** der Motorstrom $I_{zu}$ bzw. $I_{rück}$ und der Leerlaufstrom $I_0$ über das Motormanagement der Radbremse erfasst werden.

12. Verfahren nach einem der vorstehenden Ansprüche, **dadurch gekennzeichnet, dass** die Spannkraft $F_N$ aus folgenden Größen bestimmt wird:

- Verschleißzustand der Beläge $t_{Belage}$
- Sattelsteifigkeit $C_{Sattel}$

- Elastizitätsmodul des Bremsbelages $E_{Belag}$
- Keilposition $x_{Keil}$
- Keilwinkel $\alpha$

$$c_{Belag,ges} = \frac{E_{Belag} \cdot A_{Belag}}{2 \cdot t_{Belag}}$$

$$F_N = x_{Keil} \cdot \tan\alpha \cdot \frac{c_{Sattel} \cdot c_{Belag,ges}}{c_{Sattel} + c_{Belag,ges}}$$

13. Verfahren nach einem der vorstehenden Ansprüche, **dadurch gekennzeichnet, dass** die Belagtemperatur rechnerisch aus Bremsinformationen bestimmt wird.

14. Verfahren nach einem der vorstehenden Ansprüche, **dadurch gekennzeichnet, dass** pro Radbremse wenigstens zwei Teilbremsungen durchgeführt werden und dass aus den ermittelten Reibwerten ein Mittelwert gebildet wird.

**Claims**

1. A method for determining the coefficient of friction of a disc brake, in particular of disc brakes of a self-energizing design with a brake application device which can apply brake application forces and retracting forces to the brake lining, **characterised in that** the coefficient of friction is determined computationally using the following variables:

   - motor current for brake application direction and retraction direction $I_{zu}, I_{rück}$
   - idle current $I_0$
   - wedge angle $\alpha$
   - transmission constant K
   - tensioning force $F_N$.

2. The method as claimed in claim 1, **characterised in that** the coefficient of friction is determined under defined conditions during test brake activations which are initiated specifically for this purpose.

3. The method as claimed in claim 1 or 2, **characterised in that** the coefficient of friction between the brake disc and brake lining is determined according to:

$$\mu = \tan\alpha - \frac{K \cdot \eta_m \cdot (I_{zu} + I_{rück} - 2 \cdot I_0)}{2 \cdot F_N} \quad (7)$$

or according to:

$$\mu = \tan\alpha - \frac{K \cdot (I_{zu} + I_{rück} - 2 \cdot I_0)}{2 \cdot F_N + K \cdot (I_{zu} - I_{rück})}$$

wherein $\eta_m$ = mechanical efficiency.

4. The method as claimed in one of the preceding claims 2 to 3, **characterised in that** during the test brake activations the influence of the mechanical efficiency in the transmission chain from the motor to the actuator element on the brake lining is eliminated and the mechanical efficiency is determined on the basis of a measurement of the actuator force in the brake application direction and retraction direction.

5. The method as claimed in one of the preceding claims 2 to 4, **characterised in that** the test braking operations are carried out briefly with low braking forces, preferably on individual wheels or else individual axles of the vehicle.

6. The method as claimed in one of the preceding claims 2 to 5, **characterised in that** the test braking operations are carried out in conjunction with air clearance adjustment processes of a wear compensation adjustment system which is driven in an electromotive manner.

7. The method as claimed in one of the preceding claims, **characterised in that** fabrication tolerances are determined by a calibration process during the final testing in the mounting process of the brake.

8. The method as claimed in one of the preceding claims, **characterised in that**, during a testing process while maintaining constant peripheral conditions by evaluating the actuator force in the brake application activation direction and retraction activation direction, the coefficient of friction of the brake lining is determined precisely in order to determine the frictional resistances occurring in the activation system.

9. The method as claimed in claim 8, **characterised in that** a mechanical efficiency $\eta_m$ of the activation device is determined as follows:

$$\eta_m = 1 - \frac{\left(F_{A,zu} - F_{A,r\ddot{u}ck}\right)}{2 \cdot F_N} \quad (1),$$

wherein

$F_N$ = tensioning force, $F_A$ = actuator force and **in that** the coefficient of friction $\mu$ between the brake lining and brake disc is determined according to the following formula

$$\mu = \tan\alpha - \frac{\left(F_{A,zu} + F_{A,r\ddot{u}ck}\right)}{2 \cdot F_N} \quad (2).$$

10. The method as claimed in one of the preceding claims, **characterised in that** a mechanical efficiency $\square_m$ of the overall system is calculated in dependence on the motor current $I_{zu}$ or $I_{r\ddot{u}ck}$ as follows:

$$\eta_m = \frac{1}{1 + K \cdot \dfrac{\left(I_{zu} - I_{r\ddot{u}ck}\right)}{2 \cdot F_N}} \quad (6)$$

11. The method as claimed in one of the preceding claims, **characterised in that** the motor current $I_{zu}$ and $I_{r\ddot{u}ck}$ and the idle current $I_0$ are sensed by means of the motor management system of the wheel brake.

12. The method as claimed in one of the preceding claims, **characterised in that** the tensioning force $F_N$ is determined from the following variables:

  • wear state of the linings $t_{Belag}$

- caliper rigidity $c_{Sattel}$
- modulus of elasticity of the brake lining $E_{Belag}$
- wedge position $x_{Keil}$
- wedge angle $\alpha$

$$c_{Belag,ges} = \frac{E_{Belag} \cdot A_{Belag}}{2 \cdot t_{Belag}}$$

$$F_N = x_{Keil} \cdot \tan \alpha \cdot \frac{c_{Sattel} \cdot c_{Belag,ges}}{c_{Sattel} + c_{Belag,ges}}$$

**13.** The method as claimed in one of the preceding claims, **characterised in that** the lining temperature is determined computationally from brake information.

**14.** The method as claimed in one of the preceding claims, **characterised in that** at least two partial braking operations are carried out per wheel brake, and **in that** a mean value is formed from the determined coefficients of friction.

**Revendications**

**1.** Procédé à déterminer le coefficient de frottement d'un frein à disque, en particulier des freins à disque en conception à renfort automatique, à un moyen de serrage de frein, qui est apte à exercer des efforts de serrage et de retraite de la garniture de frein, **caractérisé en ce que** la détermination du coefficient de frottement se fait par voie mathématique à la base des quantités suivantes :

- courant de moteur pour le sens de serrage et de retraite $I_{zu}$, $I_{rück}$
- courant à vide $I_0$
- angle de coin $\alpha$
- constante de transfert $K$
- effort de serrage $F_N$

**2.** Procédé selon la revendication 1, **caractérisé en ce que** la détermination du coefficient de frottement se fait aux conditions définies au cours des les cycles d'actionnement du frein d'essai déclenchés en particulier à cette fin.

**3.** Procédé selon la revendication 1 ou 2, **caractérisé en ce que** le coefficient de frottement $\mu$ entre le disque de frein et la garniture de frein est déterminé selon la formule :

$$\mu = \tan \alpha - \frac{K \cdot \eta \cdot (I_{zu} + I_{rück} - 2 \cdot I_0)}{2 \cdot F_N} \quad (7)$$

ou selon la formule :

$$\mu = \tan \alpha - \frac{K \cdot \eta \cdot (I_{zu} + I_{rück} - 2 \cdot I_0)}{2 \cdot F_N + K \cdot (I_{zu} - I_{rück})}$$

dans laquelle

$\eta_m$ = rendement mécanique.

4. Procédé selon une quelconque des revendications précédentes 2 à 3, **caractérisé en ce qu'**au cours des les cycles d'actionnement du frein d'essai à la base de mesurage de l'effort de l'acteur en sens de serrage et de desserrage, l'influence du rendement mécanique dans le train de transfert à partir du moteur jusqu'à l'élément acteur à la garniture de frein est désactivé, pendant que le rendement mécanique est déterminé.

5. Procédé selon une quelconque des revendications précédentes 2 à 4, **caractérisé en ce que** les cycles d'actionnement du frein d'essai se réalisent aux efforts faibles temporairement, de préférence aux roues individuelles ou aussi aux essieux individuels du véhicule.

6. Procédé selon la quelconque des revendications précédentes 2 à 5, **caractérisé en ce que** les cycles d'actionnement du frein d'essai se réalisent en relation avec des opérations d'ajustement du jeu d'aération d'un système de rattrapage d'usure à entraînement électromoteur.

7. Procédé selon une quelconque des revendications précédentes, **caractérisé en ce que** des tolérances de fabrication sont déterminé par une procédure d'étalonnage au cours du contrôle final dans le processus de montage du frein.

8. Procédé selon une quelconque des revendications précédentes, **caractérisé en ce que** le coefficient de frottement de la garniture de frein est déterminé à haute précision dans un procédé de vérification, en observant des conditions marginales constantes, par l'évaluation de l'effort de l'acteur en sens de serrage et de retraite afin de déterminer les résistantes dues au frottement.

9. Procédé selon la revendication 8, **caractérisé en ce qu'**un rendement mécanique $\eta_m$ selon le sens d'actionnement est établi comme suit :

$$\eta m = 1 - \frac{(F_{zu.m} - F_{A.rück})}{2 \cdot F_{N}} \quad (1),$$

dans laquelle

$F_N$ = effort de serrage ; $F_A$ = effort de l'acteur

et **en ce que** le coefficient de frottement $\eta$ entre la garniture et le disque de frein est établi selon la formule suivante :

$$\mu = \tan \alpha - \frac{(F_{zu.m} + F_{A.rück})}{2 \cdot F_{N}} \quad (2),$$

dans laquelle

$\eta_m$ = rendement mécanique.

10. Procédé selon une quelconque des revendications précédentes, **caractérisé en ce qu'**un rendement mécanique $\eta_m$ du système entier est déterminer par le calcul suivant, en fonction du courant de moteur $I_{zu}$ ou respectivement $I_{rück}$ :

$$\eta_m = \frac{1}{1 + K \cdot \frac{I_{zu} - I_{rück}}{2 \cdot F_{N}}} \quad (6)$$

11. Procédé selon une quelconque des revendications précédentes, **caractérisé en ce qu'**on détecte le courant du moteur $I_{zu}$ ou respectivement $I_{rück}$ et le courant à vide $I_0$ via le système de gestion du moteur du frein sur roue.

12. Procédé selon une quelconque des revendications précédentes, **caractérisé en ce que** l'effort effort de serrage

$F_N$ est déterminé en le dérivant des paramètres suivants :

- état d'usure des garnitures $t_{Belag}$
- rigidité de l'étrier $C_{Sattel}$
- module d'élasticité de la garniture de frein $E_{Belag}$
- position de coin $X_{Keil}$
- angle de coin $\alpha$.

$$C_{Belag.ges} = \frac{E_{Belag} \cdot A_{Belag})}{2 \cdot t_{Belag}}$$

$$F_N = X_{Keil} \cdot \tan \alpha - \frac{C_{Sattel} \cdot C_{Belag.ges}}{C_{Sattel} + C_{Belag.ges}}$$

**13.** Procédé selon une quelconque des revendications précédentes, **caractérisé en ce que** la température de la garniture est déterminée par calcul, en la dérivant des informations de freinage.

**14.** Procédé selon une quelconque des revendications précédentes, **caractérisé en ce qu'**au moins deux cycles de serrage de frein partiel sont réalisés par frein sur roue, et **en ce qu'**une valeur moyenne est établie moyennant les coefficients de frottement ainsi déterminés.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10151950 A1
- DE 3610569 A1
- DE 3716202 A1
- EP 0688404 A1
- WO 0214708 A1
- DE 102004044940 A1